# EUROPEAN PATENT APPLICATION

(11) **EP 4 814 647 A1**
(43) Date of publication of application: **30.09.2026**
(21) Application number: 25767443.2
(22) Date of filing: 06.03.2025
(51) Int. Cl.: G05D 23/20

(54) **PREHEATING CONTROL METHOD FOR BREAST SHIELD, AND RELATED DEVICE**

(30) Priority: 06.03.2024 CN 202410253560
(71) Applicant: Shenzhen Lute Jiacheng Supply Chain Management Co., Ltd., Shenzhen, Guangdong 518000 (CN)
(72) Inventor: XIE, Guangbao, Shenzhen, Guangdong 518000 (CN); TANG, Jiyan, Shenzhen, Guangdong 518000 (CN)
(74) Representative: Osterhoff, Utz
(86) International application number: PCT/CN2025/081039
(87) International publication number: WO 2025/185703

(57) **Abstract**

A preheating control method for a breast shield (200), and a breast pump. A heating assembly is embedded in the breast shield (200). Current temperature information of the breast shield (200) is collected; and based on a relationship between the current temperature information and a preset temperature range, an adaptive control signal is outputted to enable the heating assembly to be in different working states, so that the current temperature information of the breast shield (200) gradually approaches the preset temperature range, and is finally maintained in the preset temperature range. Thus, the comfort of a user using the breast pump is improved, and the technical problems in the related art that a user's use experience is impaired when a breast pump is used in a low ambient temperature environment are solved.

## Description

### TECHNICAL FIELD

The present application relates to the technical field of maternal and infant electrical products, and in particular to a preheating control method for a breast shield, and a related device.

### BACKGROUND

An electric breast pump is an important electronic device for assisting women in infant feeding, and comfort during use has become one of the most important considerations for users. When using an electric breast pump, users generally desire to achieve a comfortable experience.

In the related art, a breast pump generally includes a breast shield and a breast pump main body (including a housing, a pump mechanism, a control board, a milk container, and the like). During use, the user attaches the breast shield to the breast, and the pump mechanism operates to generate negative pressure so as to extract breast milk, which is then guided into the milk container for storage. However, in low-temperature environments, the surface temperature of the breast shield decreases due to the influence of ambient temperature. When the user attaches the breast shield to the breast, the low temperature often causes an immediate feeling of coldness and discomfort. This not only results in an uncomfortable user experience but may also reduce the breast pumping efficiency of the breast pump due to user discomfort.

Therefore, how to solve the technical problem in the related art that when using breast pumps, the surface temperature of the breast shield is too low due to environmental influences, resulting in a poor user experience and even further affecting the breast pumping efficiency, has become a technical problem that urgently needs to be solved by those skilled in the art.

### SUMMARY

The present application provides a preheating control method for a breast shield, and a related device, which solves the technical problem in the related art that when a breast pump is used in a low-temperature environment, the surface temperature of the breast shield is too low relative to the user's body temperature, resulting in a poor user experience and potentially affecting the breast pumping efficiency.

In a first aspect, an embodiment of the present application provides a preheating control method for a breast shield, a heating assembly is embedded in the breast shield, and the preheating control method includes:
collecting current temperature information of the breast shield;
determining a relationship between the current temperature information and a preset temperature range;
in response to the current temperature information being lower than the preset temperature range, outputting a heating control signal to control the heating assembly to operate and heat the breast shield;
in response to the current temperature information being higher than the preset temperature range, stopping output of the heating control signal so that the heating assembly stops operating; and
in response to the current temperature information being within the preset temperature range, outputting a constant temperature control signal to control the heating assembly to operate so that the heating assembly maintains current temperature.

The preheating control method for the breast shield according to the embodiments of the present application has at least the following beneficial effects.

The present application provides a preheating control method for a breast shield. A heating assembly is embedded within the breast shield. By collecting the current temperature information of the breast shield and, based on the relationship between the current temperature information and a preset temperature range, an adaptive control signal is output to cause the heating assembly to operate in different states. This gradually brings the current temperature information of the breast shield closer to the preset temperature range and is finally maintained within the preset temperature range, improving the user's comfort when using the breast pump. This method solves the technical problem in the related art that breast pumps cause poor user experience and affect the user's breast pumping efficiency when used in low ambient temperature scenarios, and provides a preheating control method for breast pump shields that is comfortable and helps improve breast pumping efficiency.

According to some other embodiments of the present application, the preheating control method further includes:
determining whether fitting pressure information of the breast shield is received; and
in response to receiving the fitting pressure information, stopping output of the heating control signal or the constant temperature control signal so that the heating assembly stops operating.

According to some other embodiments of the present application, the preheating control method further includes:
determining whether the fitting pressure information of the breast shield is received;
in response to receiving the fitting pressure information, further determining whether the current temperature information is lower than the preset temperature range; and
in response to the current temperature information being lower than the preset temperature range, outputting a rapid heating control signal to control the heating assembly to be in rapid heating mode so that the current temperature quickly reaches the preset temperature range.

According to some other embodiments of the present application, the outputting the heating control signal to control the heating assembly to operate includes:
obtaining a temperature difference value according to the current temperature information and a preset temperature threshold, where the preset temperature threshold is within the preset temperature range; and
adjusting the heating control signal according to the temperature difference value, and controlling the heating assembly to operate at a desired power.

According to some other embodiments of the present application, the heating control signal includes a pulse width modulation (PWM) signal; the adjusting the heating control signal according to the temperature difference value, and controlling the heating assembly to operate at the desired power includes:
obtaining a preset adjustment power corresponding to the temperature difference value; and
adjusting a duty cycle of the PWM signal according to the preset adjustment power so that the heating assembly operates at the desired power.

According to some other embodiments of the present application, the outputting the constant temperature control signal to control the heating assembly to operate includes:
obtaining a corresponding preset constant power according to the current temperature information; and
adjusting the duty cycle of the PWM signal according to the preset constant power so that the heating assembly maintains the current temperature.

According to some other embodiments of the present application, the heating assembly includes a plurality of heating wires, the plurality of heating wires are embedded in the breast shield; the adjusting the heating control signal according to the temperature difference value, and controlling the heating assembly to operate at the desired power includes:
obtaining a preset number of heating wires according to the temperature difference value; and
controlling a corresponding number of heating wires to operate through the heating control signal.

According to some other embodiments of the present application, the collecting the current temperature information of the breast shield includes:
obtaining the current temperature information through a temperature acquisition unit provided in the breast shield.

According to some other embodiments of the present application, the fitting pressure information is obtained by a pressure acquisition unit provided in the breast shield.

In a second aspect, an embodiment of the present application provides a breast shield, which includes a heating assembly, a temperature acquisition unit and a breast shield body, and the heating assembly and the temperature acquisition unit are both embedded and fixedly provided in the breast shield body;
the temperature acquisition unit is configured to acquire the current temperature information of the breast shield body and send the current temperature information to an external controller; and
the external controller outputs a control signal according to the current temperature information to control an operating state of the heating assembly, so that the heating assembly is in a heating operating state, a stopped operating state, or a constant temperature state.

According to other embodiments of the breast shield of the present application, the heating assembly includes a plurality of curved heating wires, and the plurality of curved heating wires are embedded and fixedly provided in the breast shield body in a preset structure.

According to other embodiments of the breast shield of the present application, the plurality of curved heating wires are connected in parallel.

According to other embodiments of the breast shield of the present application, the heating assembly includes a spiral heating wire, and the spiral heating wire is embedded and fixedly provided in the breast shield body.

According to other embodiments of the breast shield of the present application, the breast shield further includes a pressure acquisition unit;
the pressure acquisition unit is embedded and fixedly provided in the breast shield body, and is configured to acquire pressure data information and transmit the pressure data information to the external controller; and
the external controller outputs a control signal according to the pressure output information to control the operating state of the heating assembly.

In a third aspect, an embodiment of the present application provides a breast pump, including a breast pump body and the breast shield as described above;
the breast pump body is provided with a controller, and the controller is configured to execute the preheating control method as described above to control the operating state of the heating assembly in the breast shield.

According to other embodiments of the breast pump of the present application, the breast shield is detachably connected to the breast pump body; and
the breast shield is provided with a first electrical interface, the breast pump body is provided with a second electrical interface, the first electrical interface is detachably connected to the second electrical interface, and the first electrical interface and the second electrical interface are connected to perform data transmission communication.

In a fourth aspect, an embodiment of the present application provides a computer-readable storage medium, the computer-readable storage medium stores an executable program, and when the executable program is executed by a processor, the preheating control method as described above is implemented.

### BRIEF DESCRIPTION OF THE DRAWINGS

FIG. 1 is a flow chart of a specific embodiment of a preheating control method for a breast shield according to an embodiment of the present application.
FIG. 2 is a flow chart of another specific embodiment of the preheating control method for the breast shield according to an embodiment of the present application.
FIG. 3 is a flow chart of a specific embodiment of step S300 in the preheating control method for the breast shield according to an embodiment of the present application.
FIG. 4 is a flow chart of a specific embodiment of step S320 in the preheating control method for the breast shield according to an embodiment of the present application.
FIG. 5 is a flow chart of a specific embodiment of step S500 in the preheating control method for the breast shield according to an embodiment of the present application.
FIG. 6 is a schematic structural diagram of a specific embodiment in which a heating assembly is embedded in a breast shield in the preheating control method for the breast shield according to an embodiment of the present application.
FIG. 7 is a schematic circuit connection diagram of a specific embodiment in which a heating assembly includes a plurality of heating wires in the preheating control method for the breast shield according to an embodiment of the present application.
FIG. 8 is a schematic circuit connection diagram of another specific embodiment in which the heating assembly includes a plurality of heating wires in the preheating control method for the breast shield according to an embodiment of the present application.
FIG. 9 is a schematic structural diagram of a specific embodiment of the breast shield according to an embodiment of the present application.
FIG. 10 is a schematic structural diagram of another specific embodiment of the breast shield according to an embodiment of the present application.
FIG. 11 is a schematic structural diagram of a specific embodiment of the breast pump according to an embodiment of the present application.

### DETAILED DESCRIPTION OF THE EMBODIMENTS

The following will describe the inventive concept and its resulting technical effects clearly and completely with reference to embodiments, so as to fully understand the purpose, features and effects of the present application. Obviously, the described embodiments are only a part of the embodiments of the present application, not all of them. Other embodiments obtained by those skilled in the art based on the embodiments of the present application without creative effort are all within the scope of protection of the present application.

In the description of the embodiments of the present application, the term "several" means one or more, and the term "a plurality of" means two or more. The terms "greater than", "less than", and "exceeding" should be understood as excluding the stated number, while the terms "above", "below", and "within" should be understood as including the stated number. The terms "first" and "second" should be understood as distinguishing technical features, and not as indicating or implying relative importance, the number of indicated technical features, or the order of the indicated technical features.

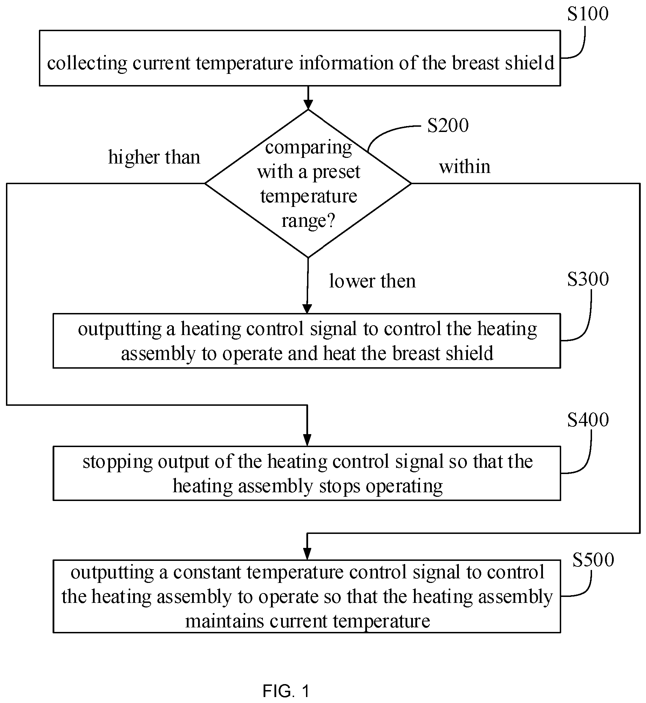

Referring to FIG. 1, this embodiment of the application provides a preheating control method for a breast shield, where a heating assembly is embedded in the breast shield, and preheating control of the breast shield is further achieved by controlling the heating of the heating assembly. In this embodiment of the application, the preheating control method is generally applied in the controller of a breast pump, and the preheating control method includes the following steps:
S100, collecting current temperature information of the breast shield.

In order to provide users with more precise temperature control and improve user comfort and breast pumping efficiency, the monitored and collected current temperature information is the current temperature of the region of the breast shield that contacts the user's breast. Since the preheating control method of this embodiment is generally applied in low ambient temperature temperatures, and when the heating assembly embedded in the breast shield operates, a temperature difference may occur between the side of the breast shield that contacts to the user's breast (the inner side of the breast shield) and the opposite side. Therefore, monitoring and collecting the current temperature information of the region of the breast shield that contacts the user's breast enables more precise preheating control of the breast shield.

S200, determining a relationship between the current temperature information and a preset temperature range.

The preset temperature range is either a temperature range that is fixed and suitable for human body temperature after a plurality of tests, or a larger temperature range is set and the user can choose a preset temperature range from the larger temperature range. In this embodiment, the preset temperature range is usually small or even a specific temperature value, such as 38°C, 38.3°C, 38.5°C, 38-38.3°C, 38 to 38.5°C, or 38 to 39°C. However, to prevent frequent switching of the heating assembly between an on state and an off state during preheating control, a preset temperature range with a small span is generally configured. The principle for setting the preset temperature range is that it should be higher than normal human body temperature, but should not cause damage to the skin or other tissues or organs, or cause a burning sensation to the user, it shall provide the user with a warm, comfortable feeling when the user attaches the breast shield to the breast.

In response to determining in step S200 that the current temperature information is lower than the preset temperature range, the following step is performed:
S300, outputting a heating control signal to control the heating assembly to operate and heat the breast shield.

When the current temperature information is lower than a preset temperature range, it indicates that if the user attaches the breast shield to their breast perform breast pumping, the current temperature information is too low to provide sufficient warmth and comfort. Therefore, upon determining that the current temperature information is lower than the preset temperature range, a heating control signal is output to activate the heating assembly, thereby raising the temperature of the breast shield to provide a comfortable operating temperature for the user. In some specific embodiments, the component of the breast shield that contacts the user includes a flange, which is made of silica gel. By embedding and fixing the heating assembly within the flange, the flange can effectively conduct heat when the heating assembly generates heat, such that temperatures of various regions of the flange in contact with the user's breast are relatively uniform, thereby avoiding an excessive temperature difference among different regions contacting the user's breast.

In response to determining in step S200 that the current temperature information is higher than the preset temperature range, the following step is performed:
S400, stopping output of the heating control signal so that the heating assembly stops operating;

When the current temperature information is higher than the preset temperature range, it indicates that the breast shield is too hot. If the user attaches the breast shield to their breast at this time, it may burn their skin or cause a burning sensation during breast pumping. Therefore, when the current temperature information is determined to be higher than the preset temperature, the heating control signal needs to be stopped, thereby controlling the heating assembly to stop operating and allowing the temperature of the breast shield to drop naturally.

In response to determining in step S200 that the current temperature information is within the preset temperature range, the following step is performed:
S500, outputting a constant temperature control signal to control the heating assembly to operate so that the heating assembly maintains current temperature.

When the current temperature information is within the preset temperature range, it means that the temperature of the breast shield can provide users with a warm and comfortable feeling. When the user attaches the breast shield to the breast perform breast pumping at the current temperature of the breast shield, it can provide the user with a warm and comfortable feeling and help improve the breast pumping efficiency.

An embodiment of the present application provides a preheating control method for a breast shield. By controlling the operating state of a heating assembly embedded in the breast shield, the temperature of a region of the breast shield that contacts a user's breast reaches a preset temperature range. Thus, when the user uses a breast pump to express milk, the contact region between the breast shield and the user's breast does not produce a cold stimulus to the user due to a low ambient temperature, thereby avoiding poor user experience and a potential reduction in breast pumping efficiency.

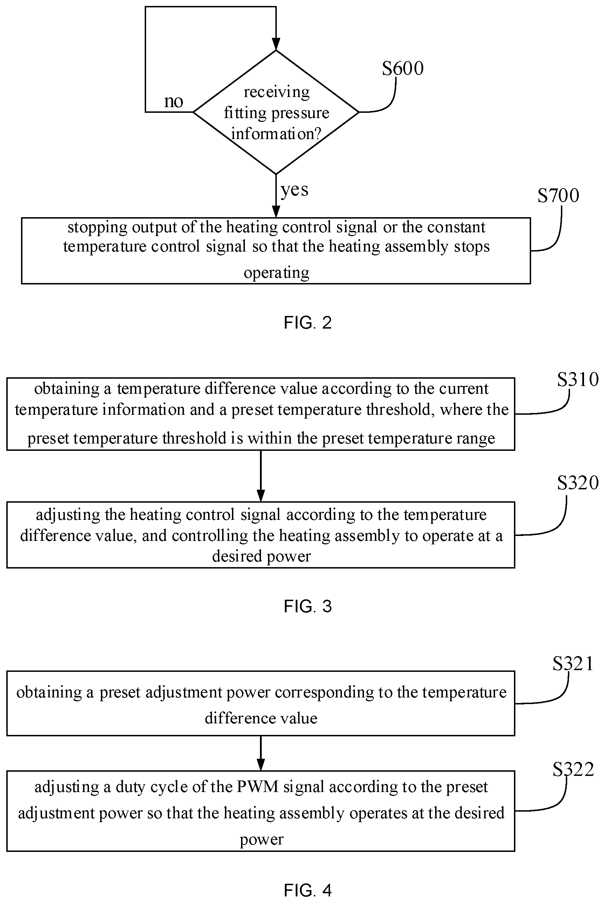

Referring to FIG. 2, in some embodiments, the operating state of the heating assembly in the breast shield is fed back to the user to indicate whether the current temperature information of the breast shield is suitable for use. Specifically, the operating state feedback of the heating assembly can be achieved by controlling the color of the indicator light. For example, a red indicator light indicates that the heating assembly is operating in heating mode, a green indicator light indicates that the heating assembly is operating in constant temperature mode, and an off indicator light indicates that the heating assembly has stopped operating. In this embodiment, when the heating assembly operates and the current temperature information is within the preset temperature range, the indicator light displays green. At this time, the user may attach the breast shield to the breast to perform a breast pumping operation. For user safety and to effectively save the power consumption of the breast pump, the preheating control method should also include the following steps when the user attaches the breast shield to the breast to perform breast pumping:
S600, determining whether fitting pressure information of the breast shield is received.

The fitting pressure information of the breast shield is usually obtained by embedding a pressure sensor in a flange of the breast shield. When the user attaches the breast shield to the breast to perform a breast pumping operation, the flange deforms accordingly, and the pressure sensor then transmits the collected fitting pressure information to a controller. The controller correspondingly adjusts and controls the operating state of the heating assembly based on whether the fitting pressure information is received.

In response to determining in step S600 that the fitting pressure information is received, the following step is performed:
S700, stopping output of the heating control signal or the constant temperature control signal so that the heating assembly stops operating.

In response to determining in step S600 that the fitting pressure information is received, this indicates that the user has attached the breast shield to the breast to perform a breast pumping operation. At this time, for the user's safety during use, in order to prevent electric leakage or scalding that may otherwise occur if the heating assembly continues to operate during use, the controller in the breast pump stops output of the heating control signal or the constant temperature control signal, thereby controlling the heating assembly to stop operating. Furthermore, when the user attaches the breast shield to the breast to perform a breast pumping operation, even if the heating assembly no longer operates, contact between the human body and the breast shield maintains the temperature of the breast shield at a level close to human body temperature for a certain period of time, so that the user does not experience an uncomfortable cold stimulus that would otherwise affect the user experience or breast pumping efficiency.

In other embodiments, when the user needs to attach the breast shield to the breast perform breast pumping due to time constraints or other reasons before the current temperature information of the breast shield is within the preset temperature range, it is desirable for the heating assembly to operate more quickly so that the current temperature information reaches the preset temperature range faster, thereby providing a better user experience. Therefore, the preheating control method should also include the following steps:
S900, determining whether the fitting pressure information of the breast shield is received;
In response to determining in step S910 that the fitting pressure information of the breast shield is received, the following step is performed:
   S910, determining whether the current temperature information is lower than the preset temperature range.

In response to determining step S910 that the current temperature information is lower than the preset temperature range, step S920 is performed:
S920, outputting a rapid heating control signal to control the heating assembly to be in rapid heating mode so that the current temperature quickly reaches the preset temperature range.

In this embodiment, the rapid heating control signal may be achieved by using a pulse width modulation (PWM) signal as the heating control signal, thereby increasing the duty cycle of the PWM signal; or by providing a plurality of heating wires to form a heating assembly, thereby controlling all or a preset number of heating wires to operate so that the current temperature information can quickly reach the preset temperature range. These two methods will be described in detail in subsequent embodiments.

Referring to FIG. 3, in some embodiments, if the ambient temperature of the breast pump is too low, the surface temperature of the breast shield in contact with the user's breast will also be too low. If the heating control power of the heating assembly is too low, the temperature of the breast shield may not be able to reach the preset temperature range within the user's expected time. Alternatively, if the ambient temperature is relatively high (slightly lower than the preset temperature range), and the heating assembly is operated with a relatively high power, it will not be easy to monitor the current temperature information of the breast shield, and the high power consumption of the breast pump will be relatively large. Therefore, in the above embodiments, in step S300 of the above embodiment, the outputting the heating control signal to control the heating assembly to operate specifically includes the following sub-steps:
S310, obtaining a temperature difference value according to the current temperature information and a preset temperature threshold, where the preset temperature threshold is within the preset temperature range;
The preset temperature threshold is a set value within a preset temperature range. If the preset temperature range is a certain temperature value, then the preset temperature threshold is the same as the preset temperature range. This embodiment obtains the temperature difference between the current temperature information and the preset temperature threshold, and then performs different power controls on the heating assembly according to the temperature difference.

S320, adjusting the heating control signal according to the temperature difference value, and controlling the heating assembly to operate at a desired power.

In step S310, after obtaining the temperature difference value, the heating control signal can be adjusted accordingly according to the magnitude of the temperature difference value so that the heating assembly can operate at the desired power. Generally, when the temperature difference is large, the heating control signal is adjusted to control the heating assembly to operate at a higher power so that the temperature of the breast shield can quickly reach the preset temperature range within the time expected by the user. When the temperature difference is small, the heating control signal can be adjusted to allow the heating assembly to operate at a lower power, thereby more accurately controlling the temperature information of the breast shield and effectively saving the power consumption of the breast pump.

Referring to FIG. 4, in some embodiments, in order to achieve precise control of the operating power of the heating assembly, the controller uses a PWM signal as the heating control signal for the heating assembly. By adjusting the duty cycle of the PWM signal, the operation of the heating assembly is controlled, thereby achieving precise control of the operating power of the heating assembly. Specifically, in the above embodiments, step S320 includes the following sub-steps:
S321, obtaining a preset adjustment power corresponding to the temperature difference value.

Each temperature difference uniquely corresponds to a preset adjustment power. In a specific implementation, a temperature difference range is usually assigned a preset adjustment power, and the preset adjustment power is continuously adjusted as the temperature difference gradually changes (the temperature difference decreases as the current temperature information rises). For example, a temperature difference of 8°C to 10°C corresponds to a first preset adjustment power (e.g., 30W), and a temperature difference of 6°C to 8°C corresponds to a second preset adjustment power (e.g., 20W). Thus, by determining the corresponding preset adjustment power through the temperature difference, precise control of the heating assembly can be achieved.

S322, adjusting a duty cycle of the PWM signal according to the preset adjustment power so that the heating assembly operates at the desired power.

The duty cycle of the PWM signal can be adjusted to regulate the average voltage of the power supply to the heating assembly. Each preset adjustment power corresponds to a ratio of the duty cycle of a PWM signal. By adjusting the duty cycle of the PWM signal, the heating assembly is controlled to operate at the desired power. When the preset adjustment power is large, the operating power of the heating assembly increases by adjusting the duty cycle of the PWM signal to a higher value; when the preset adjustment power is small, the power of the heating assembly decreases by adjusting the duty cycle of the PWM signal to a lower value.

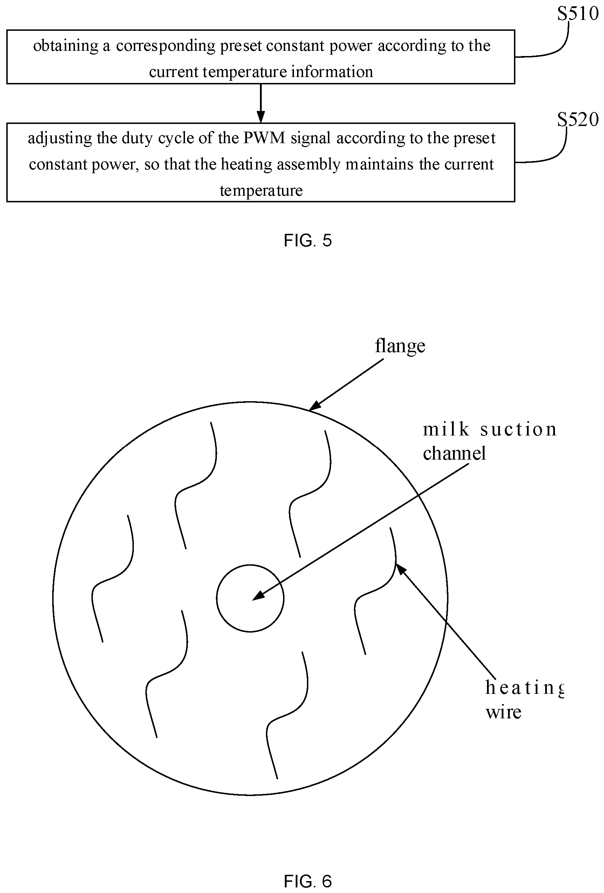

Referring to FIG. 5, in some embodiments, if the current temperature information is within a preset temperature range, it is necessary to control the operating power of the heating assembly to maintain the current temperature. In this embodiment, to maintain the current temperature, step S500 of outputting a constant-temperature control signal to control operation of the heating assembly includes the following sub-steps:
S510, obtaining a corresponding preset constant power according to the current temperature information; and
S520, adjusting the duty cycle of the PWM signal according to the preset constant power so that the heating assembly maintains the current temperature.

In this embodiment, if it is necessary to maintain the current temperature of the breast shield, the heating assembly should be controlled to operate at the corresponding preset constant power so that the heat generated by the heating assembly and the heat dissipated are relatively balanced. Then, the duty cycle of the PWM signal can be known from the voltage value corresponding to the preset constant power. By adjusting the duty cycle of the PWM signal, the average voltage value output by the controller is made consistent with the voltage value corresponding to the preset constant power, so that the heat generated by the heating assembly can maintain the current temperature of the breast shield.

Referring to FIG. 6, in some examples, the heating assembly includes a plurality of heating wires, all of which are embedded in the breast shield. Specifically, in practical design applications, the plurality of heating wires are embedded in a flange (the flange is a component of the breast shield, and the cavity formed thereby accommodates and contacts the user's breast to perform a breast pumping operation). The plurality of heating wires are evenly distributed around the milk suction channel in the flange, so that the temperature of each area of the flange that that contacts the user's breast is relatively uniform when the plurality of heating wires are operating. Therefore, in step S320 of the above embodiment, the adjusting the heating control signal according to the temperature difference value to control the heating assembly to operate at the desired power includes the following sub-steps:
S323, obtaining a preset number of heating wires according to the temperature difference value; and
S324, controlling a corresponding number of heating wires to operate through the heating control signal.

In this embodiment, a larger temperature difference corresponds to a larger preset number of heating wires, such that when a greater number of heating wires operate at the same time, the operating power (the total heat generated) is greater, thereby heating the temperature of the breast shield to within the preset temperature range within a time period expected by the user. Conversely, a smaller temperature difference corresponds to a smaller preset number of heating wires, such that when a smaller number of heating wires operate, the operating power is lower, thereby achieving precise temperature control of the flange (breast shield) while reducing power consumption of the breast pump.

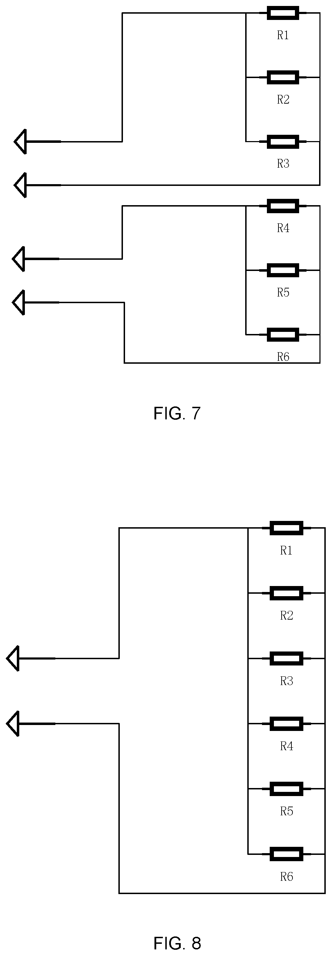

Referring to FIGS. 6 and 7, in a specific embodiment, the plurality of heating wires include a first heating wire R1, a second heating wire R2, a third heating wire R3, a fourth heating wire R4, a heating wire R5, and a sixth heating wire R6; where the first heating wire R1 to the third heating wire R3 are connected in parallel, and the fourth heating wires R4 to the sixth heating wire R6 are connected in parallel. When the temperature difference obtained in the above embodiment is large, the first heating wire R1 to the sixth heating wire R6 are controlled to operate simultaneously, thereby heating the breast shield to a temperature within the preset temperature range within a time period expected by the user. When the temperature difference in the above embodiment is small, the first heating wire R1 to the third heating wire R3, or the fourth heating wire R4 to the sixth heating wire R6, are controlled to operate, thereby achieving precise temperature control of the flange (breast shield) while saving power to the breast pump.

Referring to FIGS. 6 and 8, in a specific embodiment, the plurality of heating wires include a first heating wire R1, a second heating wire R2, a third heating wire R3, a fourth heating wire R4, a heating wire R5, and a sixth heating wire R6; where the first heating wire R1 to the sixth heating wire R6 are all connected in parallel. When the temperature difference value obtained in the above embodiment is large, the duty cycle of the PWM signal is increased to raise the operating power, such that the temperature of the breast shield is heated to within the preset temperature range within a time period expected by the user. When the temperature difference value in the above embodiment is small, the duty cycle of the PWM signal is decreased to lower the operating power, thereby achieving precise temperature control of the flange (breast shield) while saving power to the breast pump.

In addition, in some other embodiments, the heating assembly includes a spiral heating wire embedded in the flange. In this embodiment, the operating control method of the spiral heating wire is the same as that in the above embodiments, where the first heating wire R1 to the sixth heating wire R6 are connected in parallel, and will not be described again here.

In some embodiments, a temperature sensor is embedded in the flange of the breast shield to monitor and collect the current temperature information of the breast shield. In this embodiment, one or more temperature sensors may be provided. When a plurality of temperature sensors are provided, they are arranged uniformly relative to the flange. The average value of the temperature information collected by a plurality of temperature sensors is used as the current temperature information. When the temperature information collected by any one of the temperature sensors exceeds a preset threshold, the controller should stop outputting the heating control signal so that the heating assembly is in a stopped operating state.

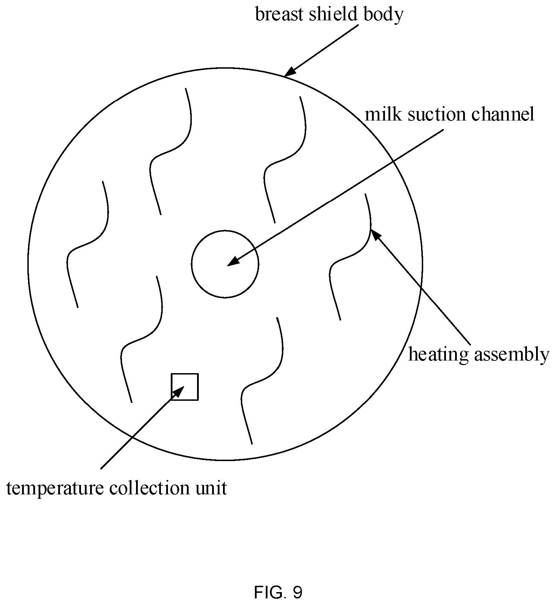

Referring to FIG. 9, an embodiment of the present application provides a breast shield, which includes a heating assembly, a temperature acquisition unit, and a breast shield body; where the heating assembly and the temperature acquisition unit are both embedded and fixedly provided in the breast shield body. The temperature acquisition unit is configured to collect the current temperature information of the breast shield body in real time and send the current temperature information to an external controller. The external controller outputs a control signal according to the current temperature information to control the heating assembly to be in a heating operating state, a stopped operating state, or a constant temperature state. In this embodiment, the external controller is a breast pump controller corresponding to the breast shield. The principle of the breast pump controller outputting control signals to control the heating assembly to be in a heating operating state, a stopped operating state, or a constant temperature state is consistent with the principle of the preheating control method for the breast shield described in the above embodiments.

Referring to FIG. 9, in some embodiments, the heating assembly includes a plurality of curved heating wires, and the curved heating wires prevents the heating wire from breaking due to deformation when the user attaches the breast shield to the breast during use. The plurality of curved heating wires are evenly distributed around the milk suction channel, so that the temperature of various regions of the breast shield that contact the user's breast is relatively uniform when the plurality of heating wires are in operation.

Referring to FIGS. 9 and 8, in some embodiments, the plurality of curved heating wires are connected in parallel. In this embodiment, the heating control signal for the plurality of curved heating wires is a PWM signal, such that the operating power of the plurality of curved heating wires is adjusted by adjusting the duty cycle of the PWM signal.

In other embodiments, the heating assembly includes a spiral heating wire, which is embedded and fixed in the breast shield body (flange). The heating control signal of the spiral heating wire is a PWM signal, and the operating power of the spiral heating wire is adjusted by adjusting the duty cycle of the PWM signal.

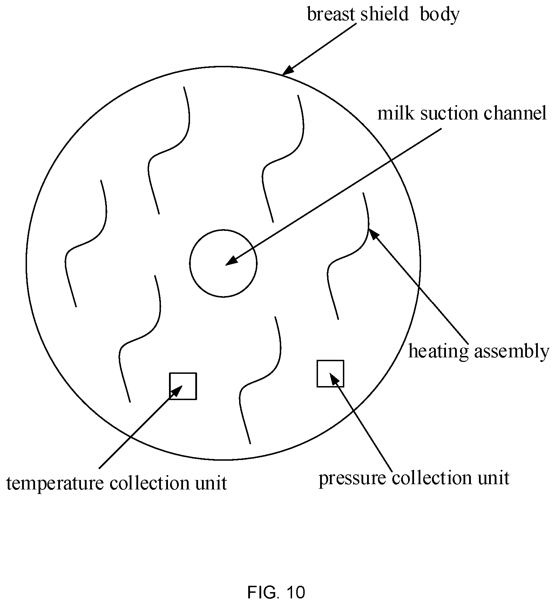

Referring to FIG. 10, in some embodiments, the breast shield is further provided with a pressure acquisition unit. The pressure acquisition unit is embedded and fixedly provided within the breast shield body, and is typically embedded and fixed in the flange (the breast shield includes the flange and a milk suction channel, and the flange is generally made of silicone material). When a user attaches the flange to the breast to perform a breast pumping operation, the flange deforms, and the pressure acquisition unit thereby obtains pressure data and transmits the pressure data to an external controller (breast pump controller). The external controller then outputs a control signal to stop the heating assembly from operating, thereby preventing potential electric leakage or burns that could occur when the heating assembly is operating while the user is using the breast shield.

In a specific example, the pressure acquisition unit includes a pressure sensor, and the pressure sensor transmits the acquired pressure data to the breast pump controller, so that the breast pump controller can control the operating state of the heating assembly according to the pressure data.

The present application provides a breast shield, which embeds and fixes a heating assembly and a temperature acquisition unit within the breast shield. The temperature acquisition unit monitors and collects the current temperature information of the breast shield and transmits the current temperature information to the breast pump controller. The breast pump controller then controls the operating state of the heating assembly according to the current temperature information, such that a temperature of the breast shield approaches a preset temperature range and maintains a constant temperature within the preset temperature range. This solves the problem in the related art that, when a breast pump is used in a low ambient temperature environment, the region of the breast shield in contact with the user's breast causes a cold stimulation to the user due to the low ambient temperature, resulting in poor user experience and potentially affecting breast pumping efficiency.

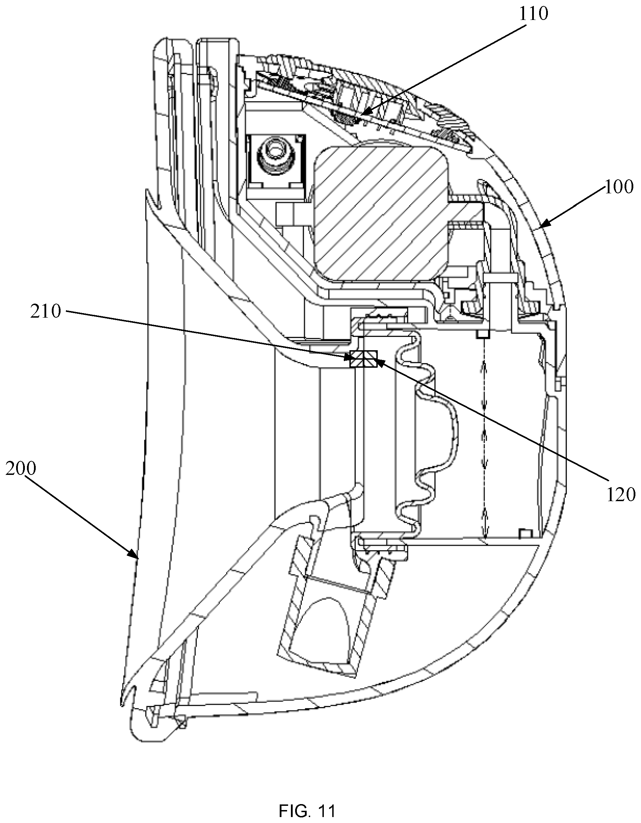

Referring to FIG. 11, an embodiment of the application also provides a breast pump, which includes a breast pump body 100 and a breast shield 200 as described in any of the above embodiments; where, a controller 110 is provided in the breast pump body 100, and the controller 110 is configured to execute the preheating control method for the breast shield described in any of the above embodiments to control the operating state of the heating assembly in the breast shield, thereby avoiding the problem that when the user performs a breast pumping operation with the breast pump in a low ambient temperature environment, the region of the breast shield that contacts the user's breast will not cause the user to feel cold due to the low ambient temperature, resulting in a very poor user experience and potentially affecting the breast pumping efficiency.

Referring to FIG. 11, in some embodiments, the breast shield 200 is detachably connected to the breast pump body 100. The breast shield 200 is provided with a first electrical interface 210, and the breast pump body 100 is provided with a second electrical interface 120. The first electrical interface 210 is also detachably connected to the second electrical interface 120. Thus, when the breast shield 200 is connected to the breast pump body 100, the first electrical interface 210 and the second electrical interface 120 are simultaneously aligned and connected, thereby enabling data transmission communication to transmit the current temperature information and pressure data information of the breast shield 200 side to the controller 210. The controller 210 outputs a control signal based on the received current temperature information and pressure data information to control the operating state of the heating assembly on the breast shield 200 side.

The present application also provides a computer-readable storage medium, the computer-readable storage medium stores an executable program, and when the executable program is executed by a processor, the preheating control method for the breast shield as described in any of the above embodiments is implemented.

The embodiments of the present application have been described in detail above with reference to the accompanying drawings. However, the present application is not limited to the above embodiments, and various changes can be made within the scope of knowledge possessed by those skilled in the art without departing from the spirit of the present application. Furthermore, the embodiments of the present application and the features thereof can be combined with each other unless otherwise specified.

## Claims

1. A preheating control method for a breast shield (200), **characterized in that** a heating assembly is embedded in the breast shield (200), and the preheating control method comprises:
(S100), collecting current temperature information of the breast shield;
(S200), determining a relationship between the current temperature information and a preset temperature range;
(S300), in response to the current temperature information being lower than the preset temperature range, outputting a heating control signal to control the heating assembly to operate and heat the breast shield;
(S400), in response to the current temperature information being higher than the preset temperature range, stopping output of the heating control signal so that the heating assembly stops operating; and
(S500), in response to the current temperature information being within the preset temperature range, outputting a constant temperature control signal to control the heating assembly to operate so that the heating assembly maintains current temperature.

2. The preheating control method according to claim 1, further comprising:
(S600), determining whether fitting pressure information of the breast shield is received; and
(S700), in response to receiving the fitting pressure information, stopping output of the heating control signal or the constant temperature control signal so that the heating assembly stops operating.

3. The preheating control method according to claim 1, further comprising:
(S900), determining whether the fitting pressure information of the breast shield is received;
(S910), in response to receiving the fitting pressure information, further determining whether the current temperature information is lower than the preset temperature range; and
(S920), in response to the current temperature information being lower than the preset temperature range, outputting a rapid heating control signal to control the heating assembly to be in rapid heating mode so that the current temperature quickly reaches the preset temperature range.

4. The preheating control method according to any one of claims 1 to 3, wherein the outputting the heating control signal to control the heating assembly to operate comprises:
(S310), obtaining a temperature difference value according to the current temperature information and a preset temperature threshold, wherein the preset temperature threshold is within the preset temperature range; and
(S320), adjusting the heating control signal according to the temperature difference value, and controlling the heating assembly to operate at a desired power.

5. The preheating control method according to claim 4, wherein the heating control signal comprises a pulse width modulation (PWM) signal; the adjusting the heating control signal according to the temperature difference value, and controlling the heating assembly to operate at the desired power comprises:
(S321), obtaining a preset adjustment power corresponding to the temperature difference value; and
(S322), adjusting a duty cycle of the PWM signal according to the preset adjustment power so that the heating assembly operates at the desired power.

6. The preheating control method according to claim 5, wherein the outputting the constant temperature control signal to control the heating assembly to operate comprises:
(S510), obtaining a corresponding preset constant power according to the current temperature information; and
(S520), adjusting the duty cycle of the PWM signal according to the preset constant power so that the heating assembly maintains the current temperature.

7. The preheating control method according to claim 4, wherein the heating assembly comprises a plurality of heating wires, the plurality of heating wires are embedded in the breast shield; the adjusting the heating control signal according to the temperature difference value, and controlling the heating assembly to operate at the desired power comprises:
(S323), obtaining a preset number of heating wires according to the temperature difference value; and
(S324), controlling a corresponding number of heating wires to operate through the heating control signal.

8. The preheating control method according to any one of claims 1, 2, 3, 5, 6 or 7, wherein the collecting the current temperature information of the breast shield comprises:
obtaining the current temperature information through a temperature acquisition unit provided in the breast shield.

9. A breast shield (200), **characterized by** comprising:
a heating assembly;
a temperature acquisition unit; and
a breast shield body,
wherein the heating assembly and the temperature acquisition unit are both embedded and fixedly provided in the breast shield body;
the temperature acquisition unit is configured to acquire the current temperature information of the breast shield body and send the current temperature information to an external controller; and
the external controller outputs a control signal according to the current temperature information to control an operating state of the heating assembly, so that the heating assembly is in a heating operating state, a stopped operating state, or a constant temperature state.

10. The breast shield (200) according to claim 9, wherein the heating assembly comprises a plurality of curved heating wires, and the plurality of curved heating wires are embedded and fixedly provided in the breast shield body in a preset structure.

11. The breast shield (200) according to claim 9, wherein the heating assembly comprises a spiral heating wire, and the spiral heating wire is embedded and fixedly provided in the breast shield body.

12. The breast shield (200) according to any one of claims 9 to 11, further comprising:
a pressure acquisition unit,
wherein the pressure acquisition unit is embedded and fixedly provided in the breast shield body, and is configured to acquire pressure data information and transmit the pressure data information to the external controller; and
the external controller outputs a control signal according to the pressure output information to control the operating state of the heating assembly.

13. A breast pump, **characterized by** comprising:
a breast pump body (100); and
the breast shield (200) according to any one of claims 9 to 12,
wherein the breast pump body (100) is provided with a controller (110), and the controller (110) is configured to execute the preheating control method according to any one of claims 1 to 8 to control the operating state of the heating assembly in the breast shield (200).

14. The breast pump according to claim 13, wherein the breast shield (200) is detachably connected to the breast pump body (100);
the breast shield (200) is provided with a first electrical interface (210), and the breast pump body (100) is provided with a second electrical interface (120);
the first electrical interface (210) is detachably connected to the second electrical interface (120); and
the first electrical interface (210) and the second electrical interface (120) are connected to perform data transmission communication.

15. A computer-readable storage medium, **characterized in that** the computer-readable storage medium stores an executable program, and when the executable program is executed by a processor, the preheating control method according to any one of claims 1 to 8 is implemented.
